# EUROPÄISCHE PATENTSCHRIFT

(11) **EP 2 241 062 B1**
(45) Veröffentlichungstag und Bekanntmachung des Hinweises auf die Patenterteilung: **17.12.2014**
(21) Anmeldenummer: 08707581.8
(22) Anmeldetag: 06.02.2008
(51) Int. Cl.: H04L 12/40, H04L 12/403, G05B 19/04, G06F 13/42

(54) **KOMMUNIKATIONSSYSTEM UND -VERFAHREN MIT GRUPPENMASTERN ZUR SERIELLEN DATENÜBERTRAGUNG IN DER AUTOMATISIERUNGSTECHNIK**
GROUP MASTER COMMUNICATION SYSTEM AND METHOD FOR SERIALLY TRANSMITTING DATA IN AUTOMATION SYSTEMS
SYSTÈME DE COMMUNICATION ET PROCÉDÉ DE COMMUNICATION AVEC MAÎTRES DE GROUPE POUR LA TRANSMISSION DE DONNÉES SÉRIE DANS LE DOMAINE DE L'AUTOMATISATION

(43) Veröffentlichungstag der Anmeldung: 20.10.2010
(73) Patentinhaber: Siemens Aktiengesellschaft, 80333 München (DE)
(72) Erfinder: BEYER, Stefan, 92263 Ebermannsdorf (DE); MEIER, Matthias, 92284 Poppenricht (DE)
(86) Internationale Anmeldenummer: PCT/EP2008/000917
(87) Internationale Veröffentlichungsnummer: WO 2009/097871

(56) Entgegenhaltungen:
- EP-A- 1 326 172
- EP-A- 1 746 752
- WO-A-91/14324
- DE-A1- 10 224 311
- DE-A1- 19 514 696

## Beschreibung

Die Erfindung betrifft ein Kommunikationsverfahren zur seriellen Datenübertragung in der Automatisierungstechnik gemäß Anspruch 1 sowie einen entsprechenden Motorabzweig gemäß Ansprüch 4.

Ziel der Automatisierungstechnik ist es, dass Maschinen oder Anlagen völlig selbstständig und unabhängig vom Menschen arbeiten. Je besser dieses Ziel erreicht wird, umso höher ist der Automatisierungsgrad. Dazu müssen allen Ebenen, angefangen von einer zentralen Steuerung, der so genannten SPS, bis hin zu den Motorabzweigen, bzw. Motorsteuerungen in der Feldebene miteinander kommunizieren.

Motorabzweige schützen und steuern den Motor dabei unabhängig von der übergeordneten zentralen Steuerung. Auch bei Ausfall der SPS, oder bei einer Störung der Kommunikation mit dieser SPS, bleibt der Motor vollständig geschützt und steuerbar.

Heute bekannte Motorabzweige sind bereits modular und damit als flexible Systeme aufgebaut. Ein Grundgerät als Basismodul realisiert dazu bereits alle für den Betrieb des Motorabzweigs notwendigen Schutz- und Steuerungsfunktionen. Bei Bedarf lässt sich dieses Basismodul über seine Systemschnittstellen mit Erweiterungsmodulen mit zusätzlichen Funktionen ergänzen. So kann beispielsweise die Art und Anzahl der binären oder analogen Ein- und Ausgänge schrittweise erhöht werden. Oder es kann ein zusätzliches Strom- bzw. Spannungserfassungsmodul zur Überwachung leistungsbezogener Messgrößen (z.B. für ein Energiemanagement)verwendet werden, usw. Damit diese Funktionen aber auch genutzt werden können, müssen die Erweiterungsmodule mit dem Basismodul kommunizieren und kontinuierlich Daten austauschen.

Die WO 91/14324 A offenbart eine Methode sowie ein Kommunikationssystem zur seriellen Datenübertragung. Die Datenübertragung erfolgt dabei mit einem oder mehreren Eingangs- und/oder Ausgangsmodulen, unter Kontrolle mindestens einer Mastereinheit. Es wird beschrieben, dass die Ein-/Ausgangsmodule in Gruppen mit der Mastereinheit über eine oder mehrere Slave-Einheiten und ein serielles Datenübertragungssystem verbunden werden können.

In der DE 102 24 311 A1 ist bereits ein Verfahren zur seriellen Kommunikation zwischen einem Basismodul und einer Reihe von Erweiterungsmodulen beschrieben, welches so bei einem Motorabzweig zum Einsatz kommen könnte. Bei dem hier beschriebenen bidirektionalen Kommunikationsverfahren werden im Sinne eines seriellen Schieberegisters Daten zwischen dem Basismodul und den nachfolgenden Erweiterungsmodulen so verschoben und ausgetauscht, dass neben der einfachen Erkennung der Erweiterungsmodule auch die Datenübertragung mit geringem technischen Aufwand realisiert werden kann.

Dieses Verfahren hat aber den Nachteil, dass durch die serielle Kommunikation durch alle Module hindurch, die Kommunikation zwischen Basismodul und den Erweiterungsmodulen relativ langsam verläuft, da alle Erweiterungsmodule die vom Basismodul gesendeten Daten beachten müssen.

Aufgabe der Erfindung ist es deshalb, ein Kommunikationsverfahren für eine schnellere Kommunikation zwischen einer seriellen Anordnung von Basis- und Erweiterungsmodulen, insbesondere von Modulen für Motorabzweige, bereitzustellen.

Diese Aufgabe wird gelöst durch das Kommunikationsverfahren nach Anspruch 1.

Erfindungsgemäß werden dadurch, dass einzelnen Erweiterungsmodulen ein Status als Gruppenmaster für die, ihnen jeweils seriell nachfolgenden Erweiterungsmodule zugewiesen wird, und dass das Basismodul in Abhängigkeit von dieser Zuordnung mit den einzelnen Erweiterungsmodulen kommuniziert, die Anzahl der Erweiterungsmodule in zumindest zwei Gruppen untergliedert, die auf unterschiedliche Weise angesprochen werden können.

Dabei wird das Basismodul zyklisch in, als Telegramme bezeichneten, ersten Zeitabschnitten über die Kommunikationsverbindung nur mit denjenigen Erweiterungsmodulen Daten austauschen, denen der Status als Gruppenmaster zugeordnet ist, und die Erweiterungsmodule, denen nicht der Status als Gruppenmaster zugeordnet ist, werden die kommunizierten Daten durchreichen. Durch eine solche, auf wenige Erweiterungsmodule eingeschränkte, "globale" Kommunikation reduziert sich für das Basismodul der für die eigentlichen Telgrammphase benötigte Zeitaufwand.

In zweiten Zeitabschnitten zwischen den Telegrammen können die Gruppenmaster dann Daten mit den jeweils ihnen zugeordneten Erweiterungsmodulen austauschen. Vorteilhafterweise werden die Gruppenmaster dazu in diesen Zeitabschnitten zwischen den Telegrammen die vom seriell vorhergehenden Erweiterungsmodul oder Basismodul übertragenen Daten ignorieren. Somit kommt es in den Pausenzeiten nur zu einer "lokalen" Kommunikation und damit zu einem lokalen Datenaustausch zwischen einigen wenigen Erweiterungsmodulen, nämlich denen, die der jeweiligen lokalen Gruppe angehören, und deren Gruppenmaster.

Durch die erfindungsgemäße Differenzierung zwischen globalem und lokalem Datenaustausch lässt sich somit insgesamt eine schnellere und effizientere Kommunikation zwischen den Modulen des Motorabzweigs erreichen. Kommunizierte Daten werden jetzt in Abhängigkeit vom Status eines Erweiterungsmoduls unterschiedlich behandelt und müssen nicht mehr von allen Modulen beachtet werden. Somit lassen sich die Übertragungswege und damit die Laufzeiten für den Datenaustausch erheblich verkürzen.

In einer weiteren vorteilhaften Ausführungsform wird das Basismodul über die Kommunikationsverbindung zusätzlich ein Steuersignal senden, das die Erweiterungsmodule darüber informiert, ob erste Zeitabschnitte als Telegramme oder zweite Zeitabschnitte zwischen den Telegrammen vorliegen. Dieses Steuersignal kann ein vorgegebenes zyklisch wiederkehrendes Binärsignal sein, das in der Kommunikationsverbindung entweder über die gleiche Leitung wie die Daten, oder über eine zusätzliche Leitung gesendet wird. Zudem könnte das Steuersignal vom Basismodul zeitlich angepasst werden, um so während des Betriebs des Motorabzweigs den Datenaustausch auf der globalen und lokalen Ebene dynamisch zu steuern. Durch diese dynamische Zuweisung ist eine zeitlich variierende Gruppenbildung innerhalb des Gesamtsystems möglich, so dass die Daten angepasst an die aktuelle Situation, global noch schneller an die richtigen Stellen transportiert und dort lokal in den einzelnen Untergruppen verarbeitet werden.

Anhand der nachfolgenden Figuren soll nun exemplarisch die Erfindung beschrieben werden. Dabei zeigen:
- FIG 1: einen bekannten seriellen Systemaufbau,
- FIG 2: schematisch das erfindungsgemäße Prinzip,
- FIG 3: eine zyklische Kommunikation bei einem bekannten seriellen Datenaustausch und
- FIG 4: die erfindungsgemäße zyklische Kommunikation.

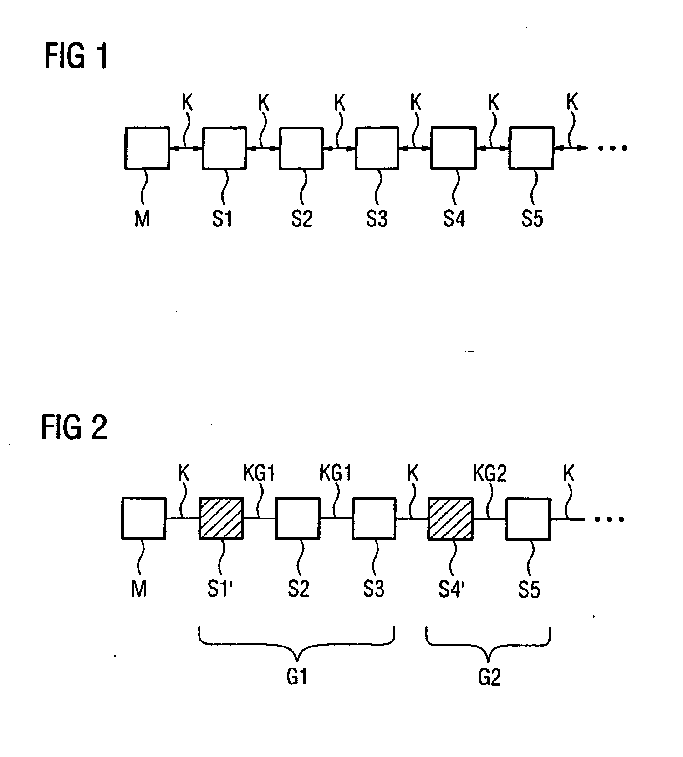

In FIG 1 ist schematisch ein heute üblicher Systemaufbau eines Motorabzweigs, bestehend aus einem Basismodul M und fünf Erweiterungsmodulen S1 bis S5, dargestellt. Das Basismodul M ist hier der Systemmaster, der mit den in Reihe geschalteten Erweiterungsmodulen kommuniziert. Das Basismodul M stellt dabei das Grundgerät eines Motorabzweigs dar, das alle notwendigen Grundfunktionen enthält, die den damit gesteuerten Motor vor Überlast, Erdschluss und zu hoher Erwärmung schützt. Die Erweiterungsmodule S1 bis S5 sind über eine nicht näher dargestellte Systemschnittstelle des Grundgerätes M mit diesem über die serielle Kommunikationsverbindung K verbunden. Die hier schematisch dargestellten Erweiterungsmodule S1 bis S5 können Zusatzgeräte, wie beispielsweise zusätzliche Ein/Ausgabebausteine, Strom- bzw. Spannungsüberwachungsbausteine oder Bedien- bzw. Anzeigebausteine, sein. Je nach Anzahl der gewünschten Erweiterungsfunktionen wird so mittels der Kommunikationsverbindung K die Systemschnittstelle des Basismoduls mit einem Eingang des ersten Erweiterungsmoduls S1, dessen Ausgang dann mit dem Eingang des nächsten Erweiterungsmoduls S2, usw. verbunden.

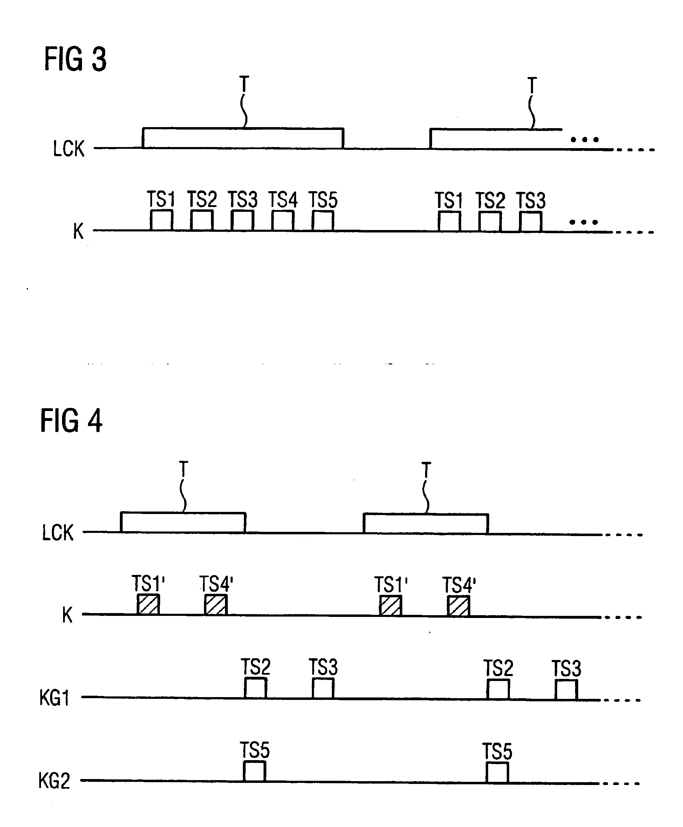

FIG 3 zeigt den dazugehörigen zeitlichen Verlauf der Kommunikation zwischen den Modulen M, als Systemmaster, und den als Slaves fungierenden Erweiterungsmodulen S1 bis S5. über die Kommunikationsverbindung K tauscht der Master M, zyklisch wiederkehrend Daten mit seinen Slaves aus. Dazu ist ein Steuersignal LCK als Taktsignal vorgesehen, das zyklisch wiederkehrend erste Zeitabschnitte, die als Telegramme T bezeichnet sind, wiederholt. Während dieser Telegramme T werden dann vom Basismodul M über die Kommunikationsverbindung K Daten in Datenpaketen an die einzelnen Erweiterungsmodule S1 bis S5 gesendet und empfangen. Diese Datenpakete können dabei, so wie in DE 102 24 311 A1 beschrieben, aufgebaut sein. Das heißt, die Module tauschen bidirektional Daten in einzelnen Datenpaketen TS1 bis TS5 von typischerweise 4 Byte aus. Das erste Byte eines Datenpaktes TS1 bis TS5 ist dabei ein so genanntes Modulerkennungsbyte, das zweite und das dritte Byte enthalten die zu kommunizierenden Daten für das angesprochene Modul und das letzte Byte enthält eine Art Prüfsumme der vorherigen drei Bytes. So kann der Master M mit jedem der ihm zugeordneten Slaves über die serielle Kommunikationsverbindung K bidirektional innerhalb eines Telegramms T Daten in einzelnen Datenpaketen TS1 bis TS5 austauschen. Dieses Kommunikationsverfahren hat aber den Nachteil, dass es relativ zeitaufwändig ist, da innerhalb eines Telegramms jeder der Slaves, hier S1 bis S5, vom Master M angesprochen werden muss.

In FIG 2 ist nun schematisch die erfindungsgemäße Struktur der Module dargestellt. Die Serie von Erweiterungsmodulen wird dazu in mindestens zwei Gruppen G1 und G2 unterteilt. Dazu wird beispielsweise dem ersten Erweiterungsmodul ein Status als Gruppenmaster S1' für die beiden nachfolgenden Module S2 und S3 zugeordnet und damit die erste Gruppe G1 gebildet. Die zweite Gruppe G2 wird dadurch gebildet, dass auch dem vierten Erweiterungsmodul S4' der Status als Gruppenmaster für S5 zugeordnet wird. Diese Zuordnung einzelner Erweiterungsmodule zu den Gruppen und die Anzahl der Erweiterungsmodule pro Gruppe wird dabei im Wesentlichen davon abhängen, wie die Funktionen der einzelnen Erweiterungsmodule während des Betriebs des Motorabzweigs zusammenspielen müssen.

FIG 4 zeigt den dazu notwendigen zeitlichen Verlauf der Kommunikation. Dazu ist wiederum ein Steuersignal LCK vorgesehen. Im Gegensatz zu der aus der DE 102 24 311 A1 bekannten Datenübertragung kommt es hier, während der Telegramme T aber nur zwischen dem Master M und den Erweiterungsmodulen S1' und S4', denen der Status Gruppenmaster zugewiesen wurde, zu einem globalen Datenaustausch (TS1', TS4') über die Kommunikationsverbindung K. Während dieser Telegrammphase werden die übrigen Erweiterungsmodule S2, S3, S5, usw. die hier übertragenen Daten quasi nur als Schieberegister durchreichen.

Am Ende des zyklischen Telegramms T werden aus den Slaves S1' und S4' Gruppenmaster, welche ihre Eingänge ignorieren, so dass es dann in den Zeitabschnitten zwischen den Telegrammen T ausschließlich zu einer Kommunikation innerhalb der Gruppen G1 und G2 kommen kann. Zeitgleich schalten die Erweiterungsmodule S2,S3 und S5 vom reinen Durchschieben der Daten so um, dass sie nunmehr mit den Erweiterungsmodulen S1' und S4' kommunizieren. Somit kann eine lokale Kommunikation ohne Beeinflussung der eigentlichen globalen Kommunikation aufgebaut werden.

Da Daten somit nur noch global (K) und lokal (KG1, KG2) zwischen den jeweils entsprechend zugeordneten Modulen ausgetauscht werden, kann insgesamt die Kommunikationszeit innerhalb eines erfindungsgemäß ausgebildeten Motorabzweigs verringert werden. Erfolgt diese Zuweisung dynamisch durch ein entsprechend angepasstes Steuersignal, kann die Kommunikationszeit noch weiter optimiert werden.

## Patentansprüche

1. Kommunikationsverfahren zur seriellen Datenübertragung in der Automatisierungstechnik, mit einem Basismodul (M) als Systemmaster, einer Anzahl von Erweiterungsmodulen (S1,S2,S3, S4,S5,...) als Slaves, und einer bidirektionalen Kommunikationsverbindung (K), über die das Basismodul seriell mit den Erweiterungsmodulen kommuniziert, wobei die Anzahl der Erweiterungsmodule in zumindest zwei Gruppen (G1,G2) untergliedert wird indem zumindest zwei der Erweiterungsmodule (S1',S4') ein Status als Gruppenmaster für die, ihnen in der jeweiligen Gruppe seriell nachfolgenden Erweiterungsmodule (S2,S3,S5,...) zugewiesen wird,
**dadurch gekennzeichnet, dass**
- zwischen Basismodul (M) und den Erweiterungsmodulen zyklisch in, als Telegramme (T1,T2,...) bezeichneten, ersten Zeitabschnitten nur mit denjenigen Erweiterungsmodulen (S1',S4') Daten ausgetauscht werden, denen der Status als Gruppenmaster zugeordnet ist, und von den Erweiterungsmodulen (S2,S3,S5,...), denen nicht der Status als Gruppenmaster zugeordnet ist, die kommunizierten Daten durchgereicht werden, und
- in zweiten Zeitabschnitten, zwischen den Telegrammen (T1, T2,...), Daten zwischen den Gruppenmastern (S1',S4,') und den jeweils ihnen zugeordneten Erweiterungsmodulen (S2, S3,S5,...) der jeweiligen Gruppe (G1,G2) ausgetauscht werden.

2. Kommunikationsverfahren nach Anspruch 1,
**dadurch gekennzeichnet, dass** in den Zeitabschnitten zwischen den Telegrammen (T1,T2,..) von den Gruppenmastern (S1',S4') die vom seriell vorhergehenden Erweiterungsmodul (S3) oder Basismodul (M) übertragenen Daten ignoriert werden.

3. Kommunikationssystem nach einem der Ansprüche 1 oder 2,
**dadurch gekennzeichnet, dass** vom Basismodul (M) über die Kommunikationsverbindung (K) zusätzlich ein Steuersignal (S) gesendet wird, das die Erweiterungsmodule (S1',S2,S3,S4',S5,...) darüber informiert, ob erste Zeitabschnitte als Telegramme (T1,T2) oder zweite Zeitabschnitte zwischen den Telegrammen vorliegen.

4. Motorabzweig für ein Motormanagementsystem in der Automatisierungstechnik, mit einem Basismodul (M) mit Grundfunktionen für den Motorabzweig, und einer Anzahl von Erweiterungsmodulen (S1',S2,S3,S4',S5,...), die mittels eines Kommunikationsverfahren nach einem der Ansprüche 1 bis 3 miteinander kommunizieren.

## Claims

1. Communication method for serially transmitting data in automation technology, having a basic module (M) as a system master, a number of expansion modules (S1, S2, S3, S4, S5, ...) as slaves, and a bidirectional communication link (K) via which the basic module serially communicates with the expansion modules, the number of expansion modules being subdivided into at least two groups (G1, G2) by allocating at least two of the expansion modules (S1', S4') a status as group master for the expansion modules (S2, S3, S5, ...) which serially follow them in the respective group,
**characterized in that**
- data are cyclically interchanged, between the basic module (M) and the expansion modules, only with those expansion modules (S1', S4') which have been assigned the status as group master in first time periods designated messages (T1, T2, ...), and the expansion modules (S2, S3, S5, ...) which have not been assigned the status as group master forward the communicated data, and
- data are interchanged between the group masters (S1', S4') and the expansion modules (S2, S3, S5, ...) in the respective group (G1, G2) which are respectively assigned to them in second time periods between the messages (T1, T2, ...).

2. Communication method according to Claim 1,
**characterized in that**
the group masters (S1', S4') ignore the data transmitted by the serially preceding expansion module (S3) or basic module (M) in the time periods between the messages (T1, T2, ...).

3. Communication system according to either of Claims 1 and 2,
**characterized in that** the basic module (M) uses the communication link (K) to additionally send a control signal (S) which informs the expansion modules (S1', S2, S3, S4', S5, ...) of whether there are first time periods as messages (T1, T2) or second time periods between the messages.

4. Motor branch circuit for a motor management system in automation technology, having a basic module (M) with basic functions for the motor branch circuit, and a number of expansion modules (S1', S2, S3, S4', S5, ...) which communicate with one another by means of a communication method according to one of Claims 1 to 3.

## Revendications

1. Procédé de communication pour la transmission de données série dans la technique d'automatisation, comprenant un module (M) de base comme maître de système, un certain nombre de modules (S1, S2, S3, S4, S5, ... ) d'extension comme esclaves et une liaison (K) de communication bidirectionnelle, par laquelle le module de base communique en série avec les modules d'extension, le nombre des modules d'extension étant subdivisé en au moins deux groupes (F1, G2) en affectant à au moins deux des modules (S1', S4') d'extension un statut de maître de groupe pour les modules (S2, S3, S5, ... ) d'extension les suivant en série dans le groupe respectif, **caractérisé en ce que**
- il est échangé, entre le module (M) de base et les modules d'extension, cycliquement dans des premiers laps de temps désignés comme étant des télégrammes (T1, T2, ... ), des données seulement avec les modules (S1', S4') d'extension, auxquels est affecté le statut de maître de groupe, et par lesquels les données communiquées sont passées aux modules (S2, S3, S5, ... ) d'extension, auxquels le statut de maître de groupe n'est pas affecté, et
- dans des deuxièmes laps de temps entre les télégrammes (T1, T2, ... ), des données, entre les maîtres (S1', S4') de groupe et les modules (S2, S3, S5, ... ) d'extension qui leur sont associés respectivement du groupe (G1, G2) respectif, sont échangées.

2. Procédé de communication suivant la revendication 1,
**caractérisé en ce que**
dans les laps de temps entre les télégrammes (T1, T2, ... ), les données transmises par un module (S3) d'extension précédent en série ou par le module (M) de base sont négligées par les maîtres (S1', S4') de groupe.

3. Procédé de communication suivant l'une des revendications 1 ou 2,
**caractérisé en ce que**
il est envoyé par le module (M) de base par l'intermédiaire de la liaison de communication, en plus un signal (S) de commande, qui informe les modules (S1', S2, S3, S4', S5, ... ) d'extension du point de savoir si l'on est dans les premiers laps de temps sous forme de télégrammes (T1, T2) ou sous la forme de deuxièmes laps de temps entre les télégrammes.

4. Dérivation de moteur pour un système de gestion de moteur dans la technique d'automatisation, comprenant un module (M) de base ayant des fonctions de base pour la dérivation du moteur et un certain nombre de modules (S1', S2, S3, S4', S5, ... ) d'extension, qui communiquent entre eux au moyen d'un procédé de communication suivant l'une des revendications 1 à 3.
